# EUROPÄISCHE PATENTANMELDUNG

(11) **EP 2 654 010 A1**
(43) Veröffentlichungstag der Anmeldung: **23.10.2013**
(21) Anmeldenummer: 13164363.7
(22) Anmeldetag: 18.04.2013
(51) Int. Cl.: G06Q 30/02

(54) **System zur visuellen Informationsanzeige und zur Datenkommunikation**

(30) Priorität: 20.04.2012 EP 12165050
(71) Anmelder: Mirror Image AG, 9323 Steinach (CH)
(72) Erfinder: Röttcher, Oliver, 78269 Volkertshausen (DE)
(74) Vertreter: Behrmann, Niels

(57) **Zusammenfassung**

Die Erfindung betrifft eine System zur visuellen Informationsanzeige und zur Datenkommunikation betreffend die dargestellten visuellen Informationen mit einer elektronischen, als Reaktion auf eine Ansteuerung durch eine insbesondere über ein öffentliches Datenübertragungsnetz angebundenen ersten Servereinheit (28) die visuellen Informationen für einen Betrachter aufbereitenden und darstellenden Anzeigeeinheit (24;50), mit der ersten Servereinheit zusammenwirkenden Mitteln zur Anwesenheitsdetektion (66) und/oder Lokalisierung (40) des Betrachters in einem physischen Betrachtungsbereich der Anzeigeeinheit und Mitteln (64, 70) zur bevorzugt betrachterspezifischen Änderung der auf der Anzeigeeinheit dargestellten visuellen Informationen als Reaktion auf die Anwesenheitsdetektion bzw. Lokalisierung, wobei die Änderungsmittel Skalierungsmittel (68) zum Durchführen einer Größenänderung der dargestellten visuellen Informationen und/oder Content-Auswahlmittel (70) zum Ändern eines Darstellungsinhalts der Anzeigeeinheit aufweisen.

## Beschreibung

Die vorliegende Erfindung betrifft ein System zur visuellen Informationsanzeige sowie zur Datenkommunikation betreffend die angezeigten visuellen Informationen.

Aus dem Stand der Technik ist es bekannt, mit Hilfe von (im privaten oder öffentlichen Umfeld aufgestellten) Monitoren oder dergleichen elektronischen Anzeigeeinheiten verschiedenster Arten von Informationen statisch oder dynamisch darzustellen, wobei zunehmend derartige Informationen digital von entfernt ("remote") vorliegenden Servereinheiten bereitgestellt werden. Derartige visuelle Informationen, typischerweise basierend auf digitalen Dokumenten, können dabei sowohl aktuelle visuelle (bzw. audio-visuelle) Medienwiedergaben sein, als auch Wiedergaben von Webseiten, von Spielen, von Büchern oder dergleichen typischerweise digital vorliegendem Inhalt ("Content").

Aus dem Stand der Technik ist es ferner bekannt, mit Hilfe von mobilen, typischerweise portablen Datenverarbeitungseinheiten auf elektronische Inhalte über drahtlose (üblicherweise öffentliche) Datenübertragungsnetze zuzugreifen, wobei sich die Nutzung der öffentlichen Mobilfunknetze für derartige Zwecke zunehmend etabliert.

Ferner ist es als zum Stand der Technik gehörig vorauszusetzen, dass derartige mobile Einheiten zum Zweck einer vereinfachten Bedienung, Navigation und Informationserfassung mit geeigneten Bildaufnahmemitteln (etwa integrierten Kameras) versehen sind, welche durch eine Bedienperson (Benutzer) der mobilen Einheit auf eine Informationsanzeige gerichtet werden und durch Abtasten dieser Anzeige dann einen diesem Inhalt entsprechenden digitalen Datenstrom erzeugen können. Dabei ist es zum einen als aus dem Stand der Technik bekannt vorauszusetzen, dass derartige Bildaufnahmemittel an mobilen Datenverarbeitungseinheiten mit zugehöriger Steuersoftware so ausgestaltet sind, dass etwa eine Identifikation des abgetasteten Bildes allein aufgrund der zugehörigen Bilddaten möglich ist; beispielhaft sei etwa das Abtasten von Buchtiteln mit derartigen Bildaufnahmemitteln genannt, welche nachfolgend im mobilen Gerät nicht nur in eine konkrete bibliografische Identifikation des Buches umgesetzt werden können, sogar ermöglicht es dann die mobile Datenverarbeitungseinheit, über das öffentliche Datenübertragungsnetz geeignete produktspezifische Informationen heranzuführen.

Zum anderen ist es als aus dem Stand der Technik bekannt vorauszusetzen, mit derartigen Einheiten geeignete Codes bzw. Codemuster durch optisches Abtasten zu erfassen, wobei diese Codemuster dann typischerweise eine über das öffentliche Datenübertragungsnetz zugreifbare Adresse eines Inhaltsanbieters kennzeichnen, so dass allein auf der Basis eines Abtast- und Auswertevorgangs einer solchen Codierung (bekannt sind etwa die zweidimensionalen sogenannten QR-Codierungen) dann ein Zugriff auf eine geeignete Servereinheit als Informationsprovider erfolgen kann.

All diese Ansätze ermöglichen ein zunehmend komfortables, variables und situationsabhängiges Aufnehmen verschiedenster, visuell erkennbarer Information, wobei dann die typischerweise entweder der manuell handhabbaren Datenverarbeitungseinheit unmittelbar zugeordnete, ergänzend oder alternativ mittelbar über eine angebundene Servereinheit zugeordneten Auswerteeinheiten geeignete Verbindungen zu netz- bzw. serverbasiertem Inhalt herstellen.

Allerdings sind derartige Technologien, welche einen Navigationsvorgang als Reaktion auf entsprechende abgetastete visuelle Informationen auslösen, primär passiv, d.h. sie ermöglichen nicht ohne weiteres das vollständige Abbilden und Durchführen von Transaktionsvorgängen, bei welchen der Benutzer und Betrachter der visuellen Informationen eine aktive Rolle spielen soll, etwa beim Erwerb einer mittels dieser Technologien beworbenen Ware: So ist es etwa bei aus dem Stand der Technik als bekannt vorauszusetzenden QR-Erfassungstechnologien möglich, mit einem Smartphone oder dergleichen manuell handhabbarem Datenverarbeitungsgerät derartige, z.B. an öffentlichen Plakatwänden gezeigte Codierungen abzutasten und als Reaktion darauf auf eine entsprechend zugehörige Internetadresse zuzugreifen, weitergehende Transaktionen machen jedoch danach erst aktives Tätigwerden des Benutzers notwendig, wie etwa das Durchführen der jeweils anbieterspezifischen Transaktionsvorgänge (etwa das darauffolgende Kaufen der beworbenen Ware), indem der durch die Adresse gekennzeichnete Webshop in ansonsten bekannter Weise betreten und eine Kauf- und Bezahltransaktion nach erfolgter Identifikation durchgeführt wird.

Dies ist insbesondere in Zeiten schwankender Kundenaufmerksamkeit, kurzen Bedürfniserzeugungs- und Befriedigungszyklen von digital angesprochenen Kunden und einem zunehmenden Trend zu spontanen Entscheidungen potenziell nachteilig, denn es ist zu befürchten, dass gewisse Transaktionen (welche grundsätzlich Nachfrage des betroffenen Betrachters und Benutzers der manuellen Datenverarbeitungseinheit erzeugen), allein deswegen nicht durchgeführt werden, weil dieser die nachfolgenden Schritte in der Vorbereitung und Durchführung der Kauftransaktion scheut.

In diesem Zusammenhang ist dann der Umstand zu sehen, dass selbst mittels elektronischer Anzeigeeinheiten und kreativ dargestelltem Anzeigeinhalt zunehmend weniger Aufmerksamkeit eines Betrachters erzielbar ist; nicht nur nehmen die auf einen Betrachter wirkenden optischen Reize permanent zu, auch lösen elektronische Displays verschiedener Art gängige Plakate oder andere statische Informationsgeber ab, so dass insoweit eine weitere Herausforderung darin besteht, hinreichende Aufmerksamkeit des Betrachters für die dargestellten visuellen Informationen zu erhalten.

Aufgabe der vorliegenden Erfindung ist es daher, ein System zur visuellen Informationsanzeige und zur Datenkommunikation betreffend die angezeigten visuellen Informationen zu schaffen, welche insbesondere im Hinblick auf das Abbilden auch komplexer Transaktionsvorgänge, wie etwa Kauf- und Vergütungstransaktionen (in welche der Betrachter bzw. Benutzer aktiv identifiziert einbezogen sein muss) mit deutlich verringertem Aufwand zu ermöglichen, dabei insbesondere den notwendigen Bedien- und Betätigungsaufwand für den Benutzer soweit herabzusetzen, dass dieser unverzüglich als Reaktion auf das Abtasten der visuellen Informationen und des Durchführens des damit verbundenen Navigationsvorgangs bereit ist, eine ihm darüber angebotene Transaktion durchzuführen. Generell ist zudem durch die Erfindung sicherzustellen, dass ein Betrachter einer (ihm etwa im Hinblick auf eine Transaktion) dargebotenen Information erhöhte Aufmerksamkeit schenkt, insbesondere das Gefühl bekommt, persönlich bzw. individuell adressiert zu sein und so die Wahrscheinlichkeit erhöht ist, dass der Betrachter überhaupt in der vorbeschriebenen Weise dann durch Vornehmen weiterer Bedienvorgänge Transaktionen auslöst.

Die Aufgabe wird durch das System zur visuellen Informationsanzeige mit den Merkmalen des Hauptanspruchs gelöst; vorteilhafte Weiterbildungen der Erfindung sind in den Unteransprüchen beschrieben. Während zudem die vorliegende Erfindung primär als Erzeugnis und System beansprucht wird, sollen gleichwohl solche Verfahrensmerkmale, welche die Abwicklung bzw. den Betrieb des erfindungsgemäßen Systems betreffen und aus den Anmeldungsunterlagen ersichtlich sind, im Rahmen der vorliegenden Erfindung als zur Erfindung gehörig offenbart und beansprucht gelten.

In erfindungsgemäß vorteilhafter Weise steht im Zentrum der vorliegenden Erfindung eine zur Aufbereitung und Darstellung der visuellen Information vorgesehene Anzeigeeinheit, typischerweise realisiert als (bevorzugt großflächige) farbige Displayeinheit, etwa mittels TFT, LCD od.dgl. gängigen Darstellungstechnologien. Diese Einheit kann (lokal oder, in bevorzugter Weise, remote über eine über das öffentliche Datenübertragungsnetz angebundene erste Servereinheit) mit elektronischen Content-Daten versehen werden, wobei, erfindungsgemäß vorteilhaft, zunächst diese Darstellung der visuellen Information eine Anwesenheitsdetektion oder Lokalisierung des Betrachters erfordert. Mit anderen Worten, die erfindungsgemäßen Anwesenheitsdetektionsmittel und/oder Lokalisierungsmittel erzeugen einem erfassten Betrachter zugehörige Daten, welche dann in erfindungsgemäß vorteilhafter Weise die Darstellung der visuellen Information beeinflussen bzw. ändern; ein derartiges, erfindungsgemäß benutzer- bzw. betrachterspezifisches Ändern (ohne dass der Betrachter notwendigerweise individualisiert oder identifiziert sein muss) wird dabei durch einerseits Skalierungsmittel erreicht, welche etwa ausgebildet sind, als Reaktion auf eine Anwesenheitsdetektion einem Betrachter ein (etwa schon aktuell gezeigtes) Bild oder Video in dann vergrößerter Weise darzustellen, ergänzen oder alternativ durch Wirkung von Content-Auswahlmitteln gemäß der Erfindung, welche als Reaktion auf das Anwesenheitserfassen bzw. Lokalisieren einen geeigneten Darstellungsinhalt ändern oder anpassen, vorteilhaft entsprechend einer vorbestimmten Auswahl von etwa in einem Speichersystem (Medien-Datenbank) vorgesehener Inhalte. Dies kann etwa dafür sorgen, dass, an einem Ort der Anzeigeeinheit, als Reaktion auf die Betrachteridentifikation diesem nicht nur lokale, spezifische Inhalte (etwa über eine Sehenswürdigkeit am Ort) dargebracht werden, diese können dann zusätzlich individualisiert sein, also sich etwa an ein Kind oder einen Senior als Betrachter richten.

In weiterbildungsgemäß vorteilhafter Weise besitzt die entsprechend einer weiteren, bevorzugten Realisierungsform der Erfindung vorgesehene zweite Servereinheit Mittel zur Identifikation des Betrachters sowie zum Zuordnen von betrachterindividualisierenden Daten zu den informationsspezifischen Codierungsdaten, welche (in ansonsten bekannter Weise etwa mittels einer QR-Erfassung und -Decodierung) der Benutzer von einer (typischerweise etwa öffentlich erreichbaren) Bildanzeigeeinheit abtastet. Dies führt dann dazu, dass, abweichend von gängigen QR-Verarbeitungs- und Geschäftsmodellen, der Benutzer nicht in der Art eines Routers lediglich zu dem entsprechenden Informationsanbieter geleitet wird, und dort dann anbieterspezifisch jeweilige Prozeduren durchlaufen muss, um etwa eine Kauftransaktion und dergleichen komplexe (die Benutzer einschließenden) Transaktionen durchzuführen, vielmehr ermöglichen es die der zweiten Servereinheit zugeordneten Identifikationsmittel, dass bei entsprechendem Serverkontakt der manuell handhabbaren Datenverarbeitungseinheit mit den Bildaufnahmemitteln (etwa realisiert durch ein Smartphone) ein jeweiliges, durch das Abtasten und nachfolgende Auflösen bzw. Decodieren der visuellen Information ermöglichtes Navigieren des Betrachters (Benutzers) zu serverseitigen Adressen stets im Rahmen einer konkreten Nutzeridentifikation erfolgen kann. Entsprechend ermöglicht es erfindungsgemäß die der zweiten Servereinheit nachgeschaltete Transaktionseinheit, dass auf der Basis der betrachterindividualisierenden Daten sowie der (aus dem abgetasteten Bildmuster gewonnenen) informationsspezifischen Codierungsdaten eine betrachterspezifische Transaktion unmittelbar durchgeführt werden kann, also etwa ein einer Datenübertragung zugrundeliegendes Angebot eines Kaufobjekts nachfolgend im Rahmen einer Kauftransaktion durch den Benutzer erworben und vergütet werden kann, ohne dass es potenziell gesonderter Identifikations- und/oder Bezahlungsschritte (über ein typischerweise notwendiges Bestätigen der Kaufabsicht oder dergleichen Bestätigungsvorgang hinaus) bedarf.

Eine derartige Vorgehensweise ist ersichtlich vorteilhaft und ermöglicht komfortables Navigieren durch den Benutzer (ohne dass etwa erhöhte Gefahr von Datenmissbrauch oder dergleichen besteht), denn aufgrund der erfindungsgemäßen, mittels bekannter drahtloser Technologien realisierten Anbindung zwischen der mobilen Datenverarbeitungseinheit und der zweiten Servereinheit besteht ein gegen missbräuchliche externe Zugriffe gesichertes Umfeld, welches gleichzeitig den für den Benutzer vorteilhaften Komfort ermöglicht, gezielt und identifiziert jeweils ihm angebotene digitale Dienstleistungen in Anspruch zu nehmen, ohne die Notwendigkeit zusätzlicher, anbieter- bzw. dienstleistungsspezifischer Identifikationsschritte.

Zusätzlich vorteilhaft ist dieses Prinzip für den die zweite Servereinheit mit ihren Aggregaten betreibenden Dienstanbieter, denn es ist zu erwarten, dass für verbundene, über diese Infrastruktur Produkte oder Dienstleistungen anbietende Partner eindeutig höherwertigeres Nutzerverhalten vorliegt, einerseits in potenziell höheren Kauf- bzw. Transaktionsquoten, andererseits in der Möglichkeit, aus den betrachterindividualisierenden Daten (bzw. wiederum aus diesen zu gewinnenden Profil- bzw. Historiendaten) Anhaltspunkte über attraktive Angebote, Zielmarketing oder dergleichen zu gewinnen.

In einem möglichen Anwendungsszenario dieser vorteilhaften Weiterbildung der Erfindung könnte daher das erfindungsgemäße System etwa wie folgt betrieben werden: Ein Waren- oder Dienstleistungsanbieter stellt über die erste Servereinheit und die damit verbundene Anzeigeeinheit, etwa einen Bildschirm im öffentlichen Raum, das Angebot zur Betrachtung durch den (etwa zufällig anzusprechenden) Benutzer dar. Bei Interesse tastet dieser mit Hilfe seiner mobilen Datenverarbeitungseinheit und deren Bildaufnahmemitteln die visuellen Informationen ab (greift etwa auf einen geeignet gekennzeichneten Codeabschnitt im angezeigten Bild zu), woraufhin dann der Betrachter über das öffentliche Datenübertragungsnetz verbunden ist/wird mit der zweiten Servereinheit, welche den Betrachter durch die Identifikationsmittel konkret identifiziert und die serverseitig übertragenen, dem abgetasteten angezeigten Bild entsprechenden Codierungsdaten diesen benutzer- bzw. betrachterindividualisierenden Daten zuordnen kann. Mit Hilfe dieser Kombination kann dann entweder ein Zugriff auf weitere Inhalte des Waren- bzw. Dienstleistungsanbieters erfolgen (etwa weitergeleitet zu einer weiteren Servereinheit) ergänzend oder alternativ kann bereits unmittelbar eine angebotsspezifische Transaktion ausgelöst werden, wie etwa das wiederum benutzerseitige Laden eines digitalen Medienstücks (Musik- und/oder Video), oder dergleichen Funktion.

Auch lässt sich etwa das ansonsten aus der physischen Welt bekannte Modell eines Gutscheins bzw. Coupons auf einfache Weise abbilden; hier würde etwa in der abgetasteten visuellen Information ein derartiger Coupon (bzw. eine zugehörige Rabatt- und Anbieterinformation des Produkts) liegen, und der Benutzer könnte dann über den Kontakt zur zweiten und/oder ersten Servereinheit bereits unmittelbar eine diese Gutscheinfunktion ausnutzende Transaktion tätigen. Wiederum ergänzend oder alternativ könnte über eine solche Gutscheinfunktion eine (mit dem Gutscheinanbieter selbst oder einem beliebigen Drittanbieter zu tätigende) Transaktion geeignet gefördert, rabattiert oder auf andere Weise benutzerspezifisch beeinflusst werden. Im praktischen Betrieb würde der Benutzer einen solchen Coupon als Anzeigeobjekt auf einem Display der mobilen Datenverarbeitungseinheit zur Bestätigung erhalten.

Besonders günstig ist es im Rahmen bevorzugter Ausführungsformen der Erfindung, wenn die erfindungsgemäße, der zweiten Servereinheit nachgeschaltete Transaktionseinheit Mittel zur Informationswidergabe bzw. Informationsübertragung aufweist, welche etwa für den Umgang mit digitalen Dokumenten (digitalen Medien aller denkbaren Art, eingeschlossen audio-, audio-visuelle, Spiele- und Textmedien) ausgebildet sind. Diese ermöglichen es dann beispielsweise, auf einem geeignet vorzugebenden Ort bzw. bei einem geeignet anzusprechenden Datenübertragungsnetzteilnehmer das zugehörige elektronische Dokument darzustellen, wobei zusätzlich weiterbildend dies etwa auch dadurch geschehen kann, dass dem Benutzer (Betrachter) dann clientseitig auf die manuell-handhabbare Datenverarbeitungseinheit ein entsprechender digitaler Inhalt zur Betrachtung zur Verfügung gestellt wird. Ergänzend oder alternativ ist es günstig und im Rahmen der Erfindung vorgesehen, dass auch auf der von dem Benutzer abzutastenden (bzw. bereits abgetasteten) Anzeigeeinheit ein derartiger Inhalt eines elektronischen Dokuments, etwa als Reaktion auf den zugehörigen Transaktionsvorgang, dargestellt wird.

Auf diese Weise kann dann dem Betrachter in der Art einer unmittelbaren Rückwirkung verdeutlicht werden, dass er die gewünschte Transaktion erfolgreich abgeschlossen hat, wobei dies wiederum mit beliebigen, auch benutzerindividualisierenden Mitteln geschehen kann.

Besonders bevorzugt eignen sich all diese Verwendungsformen für solche Inhalte und elektronischen Dokumente als Gegenstand von Transaktionen, welche eine typische Nutzerbeschränkung (und damit der Notwendigkeit, den Benutzer zu individualisieren und zu identifizieren) bedingen. Gleichzeitig ist die vorliegende Erfindung nicht auf die Handhabung digitaler Inhalte bzw. Informationen beschränkt, sondern eignen sich für jegliche, auch physische Transaktionsgüter, deren Behandlung im Rahmen geeigneter Betrachtungs-, Test-, Kauf-, Leih- oder (virtueller) Erprobungstransaktionen zum Gegenstand von Interaktionen mit einem Benutzer und (aktuellen oder zukünftigen) Transaktionspartner im erfindungsgemäßen Kommunikationskontext gemacht werden kann.

Dabei ist es im Rahmen der vorliegenden Erfindung prinzipiell möglich, nahezu jeden beliebigen Anzeigeinhalt als visuelle Information dem optischen Abtasten und damit der nachfolgenden Verarbeitung und Verknüpfung mit den betrachterindividualisierenden Daten zugänglich zu machen. Gleichwohl ist es, insoweit anlehnend an die als bekannt vorausgesetzte QR-Technologie, im Rahmen bevorzugter Weiterbildungen der Erfindung bevorzugt, einen derartigen abzutastenden Bereich lediglich als Teil der Anzeigeeinheit gezielt für die Codierung auszugestalten, um somit, neben einer Optimierung der Zuverlässigkeit, auch implizite Bedienungshinweise an den Benutzer zu geben (da davon auszugehen ist, dass sich Bedienungsmodi analog QR zunehmend durchsetzen und im Alltag etablieren werden).

Um eine ordnungsgemäße und zuverlässige Funktionsfähigkeit des erfindungsgemäßen System zu ermöglichen, welches typischerweise für eine Vielzahl von clientseitigen, manuell handhabbaren Datenverarbeitungseinheiten mit jeweils zugehörigem Betrachter vorgesehen und ausgebildet ist, ist es notwendig, nicht nur bereits registrierte Betrachter (Benutzer) geeignet zu verwalten bzw. diese zu identifizieren, auch muss neuen Betrachtern (Benutzern) die Möglichkeit gegeben werden, sich effizient dem System anzuschließen und so die geschilderten Vorteile nutzen zu können. Zu diesem Zweck ist weiterbildungsgemäß dem System bevorzugt clientseitig eine manuell betätigbare Eingabeschnittstelle zugeordnet, welche, neben geeigneten Bedienungsvorgängen im operativen Betrieb, insbesondere auch das Registrieren des betreffenden (neuen) Betrachters/Benutzers im Rahmen des Systems ermöglicht und eine Ablage von entsprechenden Daten in einer geeigneten, der zweiten Servereinheit zugeordneten Verwaltungseinheit zugänglich macht. Zu diesem Zweck können einerseits geeignete (mobil bedienbare) Masken im Rahmen einer APP-Anwendung geschaffen sein, ergänzend oder alternativ kann eine Verknüpfung mit bereits in systemexternen Serversystemen vorhandenen Benutzer/Betrachterdaten erfolgen, wie etwa eine datenmäßige Verbindung zu geeigneten sozialen Netzwerk-Servern oder dergleichen Infrastruktur, insbesondere mit dem Zweck, einem Neu-Benutzer den Systemzugang möglichst einfach und wenig aufwendig zu gestalten.

In der konkreten Realisierung insbesondere von elektronischen Einkaufs- bzw. Handelssystemen ist es bevorzugt, die erfindungsgemäße, der zweiten Servereinheit nachgeschalteten Transaktionseinheit zur Durchführung von Bezahlungstransaktionen mit vorteilhaft weiterbildungsgemäß vorgesehenen Bezahlungstransaktionsmitteln zu versehen. Mit diesen kann, im einfachsten Fall, der geeignet identifizierte Betrachter/Benutzer durch einfache Bestätigung die gewünschte Transaktion, etwa eine Bezahlung eines jeweils ihm angebotenen Gutes, durchführen. Ergänzend oder alternativ können Bezahlungsvarianten oder einem jeweiligen Geschäftsmodell entsprechende Bedienmodi, wie etwa das Abgeben eines Gebots oder dergleichen, ausgewählt und getätigt werden.

Weiterbildungsgemäß und vorteilhaft im Rahmen der Erfindung ist es zudem vorgesehen, jeweiligen Anzeigeeinheiten bzw. von diesen angesprochene bzw. verknüpfte Angebote mit Lokalisierungsdaten zu versehen, welche zusätzlich dem Benutzer als Grundlage für eine Auswahltransaktion angeboten werden; so kann etwa beispielhaft als Reaktion auf ein von der Anzeigeeinheit angezeigtes Restaurantangebot dem Betrachter im Rahmen der Transaktion eine Information über jeweils in der Nähe gelegene Restaurantstandorte gegeben werden (wobei dies dann zusätzlich weiterbildungsgemäß bedingt, dass auch über geeignete client- bzw. mobilgeräteseitige Lokalisierungsmittel ein aktueller Standort des Betrachters bekannt ist).

Während die Vorteile der vorliegenden Erfindung sich insbesondere darin zeigen, dass bereits zum Zeitpunkt des Zugriffs- bzw. Navigationsvorgangs als Reaktion auf das erfindungsgemäße Abtasten der Betrachter/Benutzer identifiziert ist und entsprechend kurzfristig geeignete (spezifische) Transaktionen auslösen kann, sind gleichwohl Umstände bzw. Betriebsmodi denkbar (und im Rahmen bevorzugter Ausführungsformen einstellbar und angeboten), bei welchen etwa der Betrachter entscheidet, passiv, nicht identifiziert (und in ansonsten bekannter Weise, etwa im Rahmen eine QR-Infrastruktur) auf Inhaltsangebote eines (Dritt-) Servers zuzugreifen, ohne dass hiermit konkrete, weitergehende Transaktionen verbunden sind.

Im Ergebnis ermöglicht es somit die vorliegende Erfindung in überraschend einfacher und eleganter Weise, die Möglichkeiten einer bildgestützten, bzw. bildabtastungs-basierten Navigation mit Hilfe von manuell handhabbaren Datenverarbeitungseinheiten signifikant zu verbreitern, dabei sowohl den Nutzen durch den Betrachter (die Bedienperson) durch Komforterhöhung zu verbessern, als auch einen mehrdimensionalen Nutzenvorteil für die weiteren, an der Transaktion beteiligten Netzpartner zu erhöhen.

Unabhängig davon ist die vorliegende Erfindung gleichwohl vorgesehen, in Kombination mit Merkmalen der oben beschriebenen Weiterbildungen, alternativ auch in deutlich vereinfachter, stationärer und insbesondere nicht Netz-gebundener Form, ein System zu realisieren, bei welchem ein Betrachter, bei einer Annäherung an die Anzeigeeinheit, in bevorzugt individualisierter Weise erfindungsgemäß beeinflusste bzw. geänderte Darstellungen angeboten bekommt, wobei es diesbezüglich zwar bevorzugt ist, über die weiterbildungsgemäß vorgesehenen, einem Betrachter zugeordneten mobilen, manuell handhabbaren Datenverarbeitungsgeräte (etwa ein Smartphone) die Benutzeridentifikation auf einfache Weise sicherzustellen, gleichwohl kann jedoch eine Lokalisierung des Betrachters im einfachsten Sinne auch durch eine Anwesenheits- bzw. Bewegungserfassung eines Betrachters in einem geeigneten Erfassungsbereich vor der Anzeigeeinheit erfolgen (insoweit benötigt diese Variante der Erfindung nicht notwendigerweise eine derartige mobile, betrachterseitige Datenverarbeitungseinheit, auch wenn hier wiederum eine Variante denkbar ist, bei welcher etwa, über eine typische Bluetooth-Schnittstelle od.dgl., auch eine Betrachteridentifikation durch lokale Datenkommunikation und ohne etwa die Nutzung eines Internet- bzw. Telefonkanals erfolgt).

Für eine solche Variante, aber auch für jede der vorbeschriebenen, insbesondere auf Transaktionen bezogenen Varianten ist es dabei besonders bevorzugt, die Anzeigeeinheit in Form einer mit dekorativen Elementen versehenen Displayeinheit so auszubilden, dass diese, neben einem eigentlichen Display, was auch aus einer Mehrzahl von Display-Anzeigen bestehen kann, etwa durch dekorative (Teil-) Flächen, Verspiegelungen oder andere Merkmale zur Aufmerksamkeitssteigerung dem Betrachter gegenübertreten kann. Besonders günstig wird eine solche Variante, wenn etwa für einen Einsatz in einem Innenraum, etwa eines Veranstaltungsbereichs, zusätzlich der Anzeigeeinheit Beleuchtungskörper, Beleuchtungsflächen od.dgl., bevorzugt als integrale Bestandteile der Anzeigeeinheit (bzw. einer zugehörigen flachen Oberflächenseite) zugeordnet sind; auf diese Weise können dann Beleuchtungseffekte, zusätzlich weiterbildungsgemäß potentiell benutzerspezifisch, die Attraktivität der Informationsdarstellung erhöhen bzw. ein visuelles Gesamtangebot darreichen, welches, zur Lösung der vorbeschriebenen Aufgabe, komfortable Informationsanzeigen in Verbindung mit maximalem potentiellem Aufmerksamkeitspotential bringt. Damit sind dann nicht nur zahlreiche Möglichkeiten zur visuellen (und ggf. auch zusätzlich durch Audiosignale unterstützten) Werbung ermöglicht, auch kann auf diese Weise etwa eine kontinuierliche Interaktion mit einem Betrachter erfolgen, dieser etwa, durch geeignete visuelle Anzeige- oder Audioausgabe, zu weiteren Handlungen oder Betätigungen aufgefordert werden, od.dgl.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: eine Schemadarstellung einer Anzeigeeinheit zur Realisierung eines ersten Ausführungsbeispiels des Systems zur visuellen Informationsanzeige und
- Fig.2:: ein schematisches Blockschaltbild mit wesentlichen Funktionseinheiten einer zweiten Ausführungsform des Systems zur visuellen Funktionsanzeige und zur Datenkommunikation betreffend die angezeigten visuellen Informationen gemäß einem ersten bevorzugten Ausführungsbeispiel der Erfindung.

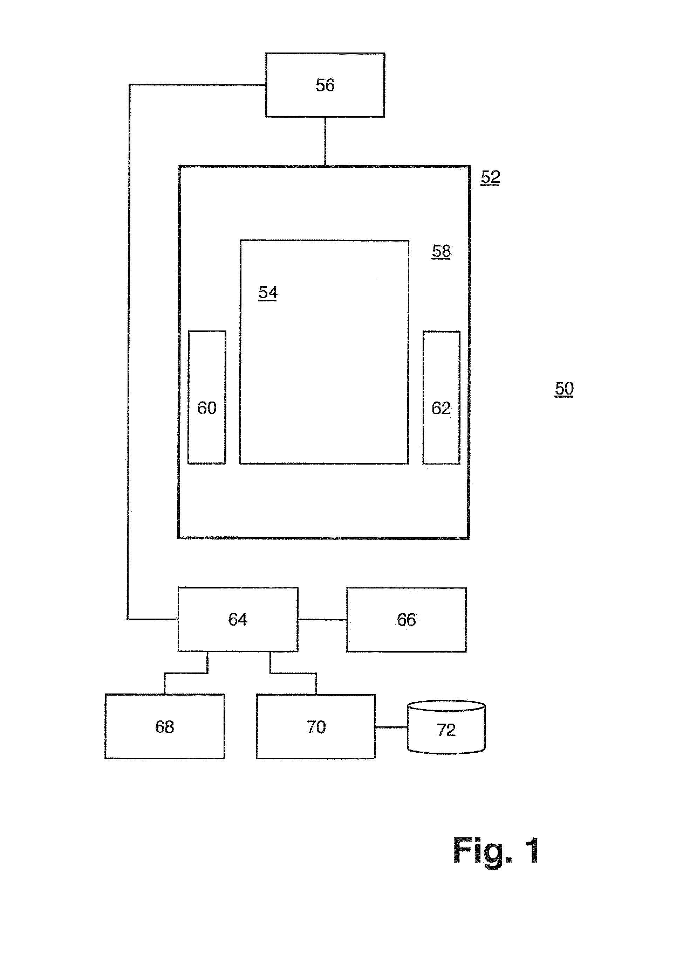

Die Fig. 1 zeigt in der Schemadarstellung ein erstes Ausführungsbeispiel der vorliegenden Erfindung, wobei mittels einer Anzeigeeinheit 50 und nachfolgend im Detail damit zusammenwirkenden Komponenten die der vorliegenden Erfindung zugrundeliegende Aufgabe realisiert wird: Die Anzeigeeinheit 50 besteht aus einer großflächigen (typischerweise 0,5 bis 3 qm) großen, auf einen Betrachter gerichteten Fläche 52, in welcher ein (je nach Ausgestaltung sichtbarer oder unsichtbarer) Ausschnitt 54 für eine dahinterliegende, in der Figur nicht gezeigte elektronische Displayeinheit gebildet ist; diese Displayeinheit, in ansonsten bekannter Weise durch eine (nicht gezeigte) Informations-Servereinheit mit digitalen Signalen für die darzustellenden Informationen an einer Eingangsschnittstelle 56 angesteuert, ist zumindest in einem aktivierten Zustand des Displays (also bei dargestellter, bewegter oder statischer visueller Information) in der Oberfläche 52 sichtbar, wobei, je nach Ausgestaltung, etwa eine Verspiegelung auf der Oberfläche dafür sorgen kann, dass in einem deaktivierten Zustand das Display innerhalb dann einer vollflächigen Verspiegelung nicht sichtbar ist. Ein der Displayfläche 54 benachbarter Randbereich 58 kann, alternativ zu einer solchen Verspiegelung, auch geeignet dekorativ eingefärbt und/oder bemustert sein, ergänzend oder alternativ können, wie durch die schematischen Bezugszeichen 60, 62 gezeigt, auch Leuchtenabschnitte integriert sein, welche dann für zusätzliche Lichteffekte sorgen, ergänzend oder alternativ in ansonsten bekannter Weise eine Hintergrundbeleuchtung bewirken od.dgl. zusätzliche visuelle Effekte beitragen. Auch können Lautsprecher od.dgl. Audioausgabemittel vorgesehen sein.

Der Displayeinheit bzw. der Eingangsschnittstelle 56 ist eine elektronische Steuereinheit 64, typischerweise realisiert durch eine Mikroprozessorvorrichtung, zugeordnet, welche den Betrieb sowohl der Anzeigeeinheit, als auch der weiteren Aggregate steuert sowie den dargestellten Inhalt erfindungsgemäß ändert bzw. modifiziert. Konkret wirkt zu diesem Zweck die Steuereinheit 64 mit einer Bewegungs- bzw. Anwesenheitsdetektoreinheit 66 zusammen. Diese Einheit 66 kann im einfachsten Fall durch einen Bewegungs- oder Anwesenheitsdetektor realisiert sein, etwa in Form eines üblichen Infrarotsensors, alternativ etwa eines Radar-Detektors (was den Vorteil hätte, dass ein solcher Detektor dann etwa hinter der Anzeigeeinheit 50 und damit unsichtbar vorgesehen sein könnte, gleichermaßen dann seinen Erfassungsbereich auf den Betrachter im Bereich vor der Anzeigeeinheit richten könnte). Als Reaktion auf ein Bewegungs- bzw. Anwesenheitsdetektorsignal der Einheit 66 würde daraufhin die Steuereinheit 64 in der erfindungsgemäßen Weise die Änderung des dargestellten Inhaltes vornehmen, insbesondere dergestalt, dass ein bereits dargestellter Inhalt, etwa ein Film oder ein statisches Bild, durch Wirkung von mit der Steuereinheit verbundenen Skalierungsmitteln 68 in einer Größe verändert wird. Beispielsweise kann in Abhängigkeit von einem erfassten Betrachter, wiederum vorteilhaft und weiterbildend in Abhängigkeit von einer konkret detektierten Abstandsposition des Betrachters relativ zur Anzeigeeinheit, eine Vergrößerung der Displayanzeige im Ausschnitt 54 bewirkt werden; diese kann dynamisch erfolgen, zeitverzögert bzw. auch wiederum nur temporär, sowohl mit dem Zweck, einerseits eine Erkennbarkeit dieser Information ggf. zu verbessern, ergänzend oder alternativ durch eine derartig erzeugte Dynamik auch Aufmerksamkeit zu erzielen.

Ergänzend oder alternativ wirkt die Steuereinheit 64 zusammen mit einer Content-Auswahleinheit 70, welche, symbolisiert durch eine Content-Speichereinheit 72, Zugriff nimmt auf eine Mehrzahl von bevorzugt gespeichert vorliegenden alternativen digitalen Mediendateien als Grundlage für die darzustellenden visuellen Informationen, welche entsprechend einer Benutzerdetektion, einem detektierten Abstand oder anderen Einflussgrößen, etwa einer Tageszeit, einem Ort der Anordnung des Systems, einer Wetterinformation od.dgl. einen spezifischen Inhalt auswählt und dem Betrachter über das Display 54 darbietet; weiterbildungsgemäß kann zudem die Einheit 68 mit der Einheit 70 dergestalt zusammenwirken, dass etwa die vorteilhafte Skalierung (welche auch gleichermaßen eine Negativskalierung, also eine Verkleinerung sein kann, wodurch dann Platz für weitere, parallel anzuzeigende Informationen gegeben ist), zusammenwirken mit einer derartigen Content-Auswahl.

Besonders komfortabel und flexibel wirkt eine solche Anordnung, wenn die Einheit 66 nicht lediglich abstrakt Bewegung bzw. Anwesenheit (und weiterbildungsgemäß bevorzugt Betrachterposition) eines Betrachters feststellt, sondern zusätzlich der Betrachter identifiziert wird. Dies kann beispielsweise dadurch geschehen, dass durch geeignetes Zusammenwirken mit netzgebundenen Strukturen der Betrachter sich identifiziert, etwa mittels einer in der Fig. 1 nicht gezeigten mobilen Datenverarbeitungseinheit (z.B. Smartphone) über ein gängiges (bevorzugt öffentliches) Datenübertragungsnetz; alternativ sind Wege denkbar, wie etwa die Einheit 66 über RFID od.dgl. Technologien eine konkrete Benutzeridentifikation vornimmt, wiederum ergänzend oder alternativ kann auch eine lokale drahtlose Datenkommunikation zwischen einer dem Betrachter zugeordneten mobilen Datenverarbeitungseinheit (wiederum Smartphone) und der Einheit 66 erfolgen, etwa dergestalt, dass auf Bluetooth-Basis eine konkrete Benutzeridentifikation durch Identifikation des dem Betrachter zugeordneten Gerätes erfolgt. Diese Betrachteridentifikation ermöglicht dann wiederum, dass die beschriebenen Modifikationen bzw. Änderungen durch die Einheiten 68, 70, ergänzend etwa weitere Betriebsmodi der Einheit 50, eingeschlossen etwa auch Beleuchtungseffekte der Einheiten 60, 62, benutzerspezifisch angesteuert und betrieben werden.

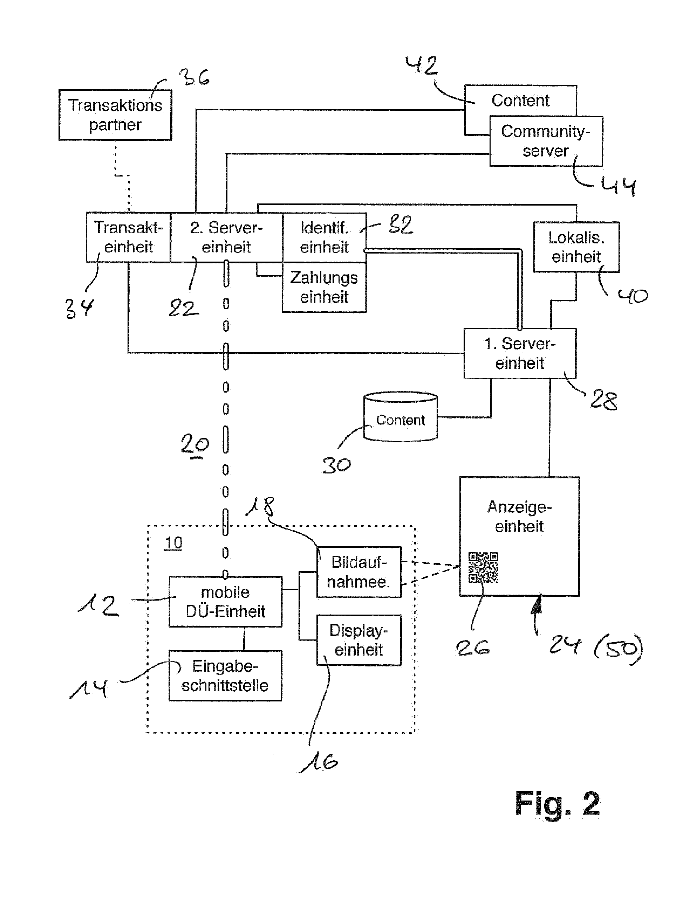

Die Fig. 2 verdeutlicht wie eine mobile, manuell handhabbare Datenverarbeitungseinheit 10, realisiert etwa in Form eines handelsüblichen Smartphones und beinhaltend eine ansonsten bekannte mobile Datenübertragungs- (DÜ-) Einheit 12, eine Eingabeschnittstelle 14, eine Displayeinheit 16 sowie eine Bildaufnahmeeinheit 18 über ein öffentliches Datenübertragungsnetz 20 in Form eines Mobilfunknetzes mit einer angebunden Servereinheit (zweiten Servereinheit 22) zusammenwirkt. Genauer gesagt ist die geeignet konfigurierte, etwa mit einer zugehörigen Programmierung versehene Datenverarbeitungseinheit 10 so ausgebildet, dass mittels der Bildaufnahmeeinheit 18 (geeignet realisiert etwa als CCD-Kameraeinheit mit nachgeschalteter Bildauswertung) das Bild einer geeignet öffentlich oder privat aufgestellten Anzeigeeinheit 24 durch Abfotografieren abgetastet werden kann. Die Anzeigeeinheit 24 wiederum kann mit den Merkmalen bzw. Komponenten des ersten Ausführungsbeispiels der Fig. 1 versehen sein. Im dargestellten Ausführungsbeispiel der Fig. 2 ist das Nutzbild der Anzeigeeinheit 24 in einem Teilbereich versehen mit einem Codierungsmuster 26 in der Art eines zweidimensionalen Barcode-Musters, welches insbesondere eine nachgeschaltete digitale Erfassung und Auswertung durch die Bildaufnahmeeinheit 18 bzw. die mobile Datenübertragungseinheit 12 vereinfacht. Auch ist die typischerweise einen Flachbildschirm aufweisende Anzeigeeinheit 24 bevorzugt mit einer Benutzer- und/oder Bedienschnittstelle, etwa in Form eines die Anzeige aktivierenden oder beeinflussenden Anwesenheits- oder Bewegungssensors versehen, insoweit kann damit auch der Anzeigebetrieb auf den (sich z.B. im Sichtfeld befindenden) Benutzer reagieren, etwa mit einer visuellen oder akustisch gegebenen Aufforderung, in der erfindungsgemäßen Weise das Anzeigebild abzutasten.

Der auf der Anzeigeeinheit 24 darzustellende Inhalt wird bereitgestellt von einer ersten Servereinheit 28 bzw. einer damit zusammenwirkenden Inhaltsspeichereinheit 30, welche beliebige elektronische Dokumente oder dergleichen Inhalte ("Content") zur Anzeige bereithält, wobei diese Inhalte dann durch die erste Servereinheit mit der geeigneten Codierung 26 versehen werden.

Die zweite Servereinheit, verbunden mit der mobilen Datenverarbeitungseinheit 10 über das Mobilfunknetz 20, weist zunächst eine Identifikationseinheit 32 auf, welche entsprechend von der Einheit 10 empfangene Codedaten einem zugehörigen Betrachter/Benutzer zuordnet, insbesondere durch betrachterindividualisierende Daten (aus einer nicht gezeigten Benutzer- bzw. Betrachterspeichereinheit der zweiten Servereinheit 22 bzw. der Identifikationseinheit 32).

Der zweiten Servereinheit zugeordnet ist ferner eine Transaktionseinheit 34, welche auf der Basis der von der mobilen Einheit 10 empfangenen, Anzeige-Inhatsspezifischen (24) Daten sowie der benutzeridentifizierenden Daten (32) eine geeignete Transaktion mit einem lokal oder remote angebundenen Transaktionspartner 36 auslösen kann, etwa eine Kauftransaktion betreffend ein jeweils mit dem digitalen Inhalt angebotenes Produkt, ggf. zusätzlich unterstützt durch einen Gutschein oder dergleichen Rabattinstrument. Um insoweit eine Vergütung durch den (identifizierten und individualisierten) Betrachter/Benutzer sicherzustellen, ist der zweiten Servereinheit bzw. der Identifikationseinheit eine Zahlungseinheit 38 zugeordnet, welche etwa zuzugreifende Zahlungsinformationen (Kreditkartendaten, Daten extern angebundener bzw. anzubindender Zahlungsdienstleister oder andere monetäre Informationen) bereitstellt und deren Nutzung autorisiert.

Koordiniert wird die Funktionalität der Transaktionseinheit 34 im Zusammenwirken mit der ersten Servereinheit 28 (als Auslöser bzw. Bereitsteller der auf der Anzeigeeinheit 24 dargebotenen Information), so dass insoweit größtmögliche Flexibilität in der Ausgestaltung besteht. Während zudem im dargestellten Ausführungsbeispiel die zweite Servereinheit 22 und die erste Servereinheit 28 als verschiedene Entitäten dargestellt sind, sind gleichwohl Realisierungsformen der Erfindung möglich und von der Erfindung umfasst, bei welchen eine gemeinsame Servereinheit die Funktionalitäten der ersten und der zweiten Servereinheit realisiert.

Zusätzlich die Flexibilität des Systems erhöhend, ist der ersten und der zweiten Servereinheit eine Lokalisierungseinheit 40 zugeordnet, welches einem jeweils dargestellten Angebot (den angebotenen Informationen) zugehörige Lokalisierungsdaten speichert und anbietet, auch hier kann der Zugriff dann geeignet flexibel erfolgen.

Schließlich ist es bei dem gezeigten Ausführungsbeispiel möglich, zusätzlichen (ggf. auch nicht identifizierend anzusprechenden) digitalen Inhalt einer weiteren Servereinheit 42 ("Content"-Server) etwa durch entsprechende Auswahl des Betrachters im Rahmen der Eingabe auszuwählen (insoweit entsprechend einer traditionellen, etwa QR-basierten Navigation) und/oder Nutzerdaten bzw. Transaktionsdaten im Austausch mit externen Server- bzw. Benutzersystemen, beispielhaft einem Community-Server 44 (z.B für das Facebook-System) auszutauschen, womit dann etwa der Benutzer seine benutzerindividualisierenden Daten unmittelbar von der Servereinheit 44 beziehen kann und/oder geeignet im Rahmen der Community-Infrastruktur zu publizierende Informationen dieser Servereinheit 44 über die zweite Servereinheit 22 bereitstellen kann.

Es wird für den Fachmann deutlich, dass die Ausführungsbeispiele der Fig. 1 und 2 bzw. auch die darin genannten und gezeigten Komponenten isoliert bzw. in beliebiger Kombination geeignet zusammengeführt werden können: So ist es einerseits bevorzugt und günstig, die Anzeigeeinheit 24 des Ausführungsbeispiels der Fig. 2 durch die Anzeigeeinheit 50 des ersten Ausführungsbeispiels samt Peripherieeinheiten 56 bis 72 (oder Auswahl von diesen) zu ergänzen, um insoweit, wiederum vor dem Hintergrund einer Verbesserung des Aufmerksamkeitswerts, die erfindungsgemäß vorteilhafte Darstellungsänderung mit der durch das Netz basierte System ermöglichten Transaktionsabwicklung zu kombinieren.

Auch sind generell die dargestellten, primär als Kauf beschriebenen Transaktionen nicht die abschließende Funktionalität der erfindungsgemäßen Transaktionseinheit, vielmehr erstreckt sich diese auf beliebige Funktionalitäten, welche sich durch die beschriebene betrachter- bzw. benutzerindividualisierende Navigation unterstützen lassen.

## Patentansprüche

1. System zur visuellen Informationsanzeige und zur Datenkommunikation betreffend die dargestellten visuellen Informationen mit
einer elektronischen, als Reaktion auf eine Ansteuerung durch eine insbesondere über ein öffentliches Datenübertragungsnetz angebundenen ersten Servereinheit (28) die visuellen Informationen für einen Betrachter aufbereitenden und darstellenden Anzeigeeinheit (24;50),
mit der ersten Servereinheit zusammenwirkenden Mitteln zur Anwesenheitsdetektion (66) und/oder Lokalisierung (40) des Betrachters in einem physischen Betrachtungsbereich der Anzeigeeinheit und Mitteln (64, 70) zur bevorzugt betrachterspezifischen Änderung der auf der Anzeigeeinheit dargestellten visuellen Informationen als Reaktion auf die Anwesenheitsdetektion bzw. Lokalisierung,
wobei die Änderungsmittel Skalierungsmittel (68) zum Durchführen einer Größenänderung der dargestellten visuellen Informationen und/oder Content-Auswahlmittel (70) zum Ändern eines Darstellungsinhalts der Anzeigeeinheit aufweisen.

2. System nach Anspruch 1,
**gekennzeichnet durch** mindestens eine dem Betrachter zugeordnete mobile, manuell handhabbare Datenverarbeitungseinheit (10), die zur datenmäßigen Identifikation des Betrachters gegenüber der ersten Servereinheit ausgebildet ist
und/oder mit Bildaufnahmemitteln (18), die zum optischen Abtasten der visuellen Informationen (26) zum Erzeugen von informationsspezifischen Codierungsdaten aus den abgetasteten visuellen Informationen und zum Übertragen der Codierungsdaten an eine zweite Servereinheit (22) über ein drahtloses öffentliches Datenübertragungsnetz (20), insbesondere über ein öffentliches Mobilfunknetz, ausgebildet ist,
wobei die zweite Servereinheit Mittel (32) zur Identifikation des Betrachters und zum Zuordnen von betrachterindividualisierenden Daten zu den informationsspezifischen Codierungsdaten aufweist
und die erste Servereinheit und/oder die Änderungsmittel auf die datenmäßige Identifikation bzw. die betrachterindividualisierenden Daten reagierend ausgebildet sind.

3. System nach Anspruch 2,
**gekennzeichnet durch** eine bevorzugt der zweiten Servereinheit zugeordnete Transaktionseinheit (34), die zum Durchführen einer betrachterspezifischen Transaktion auf Basis der datenmäßigen Identifikation und/oder der betrachterindividualisierenden Daten sowie der informationsspezifischen Codierungsdaten, insbesondere einer Kauf-, Bezahl- und/oder Datenkommunikationstransaktion, ausgebildet ist.

4. System nach Anspruch 3,
**dadurch gekennzeichnet, dass** die Transaktionseinheit Bezahlungstransaktionsmittel aufweist, die zum Durchführen einer Bezahlungstransaktion mit dem Betrachter und/oder zum Auslösen oder Freigeben eines nutzungsbeschränkten Datenverarbeitungsbetriebs betreffend die dargestellten visuellen Informationen und/oder eines nutzungsbeschränkten Informationsdarstellungsbetriebs ausgebildet sind.

5. System nach Anspruch 3 oder 4,
**dadurch gekennzeichnet, dass** die erste Servereinheit so ausgebildet ist, dass die visuellen Informationen in einem Teilbereich einer Anzeigefläche der Anzeigeeinheit oder vollflächig Bildmusterdaten, insbesondere in Form eines zweidimensionalen Codierungsmusters, aufweisen, aus denen durch das optische Abtasten die informationsspezifischen Codierungsdaten erzeugbar sind.

6. System nach einem der Ansprüche 3 bis 5,
**gekennzeichnet durch** bevorzugt der zweiten Servereinheit zugeordnete Aktivitäts- und/oder Transaktionserfassungsmittel, die einem Betätigungs-und/oder Betrachtungsverhalten eines Betrachters entsprechende und/oder für die informationsspezifischen Codierungsdaten zugehörige Profil- und/oder Historiendaten erzeugen und bevorzugt speichern.

7. System nach einem der Ansprüche 2 bis 6,
**gekennzeichnet durch** insbesondere der ersten und/oder der zweiten Servereinheit zugeordnete Lokalisierungsmittel (40), welche zum Hinzufügen von den informationsspezifischen Codierungsdaten zugehörigen Lokalisierungsdaten, insbesondere betreffend Angebotsorte von visuellen Informationen, und/oder einen Standort eines Betrachters, ausgebildet sind.

8. System nach einem der Ansprüche 1 bis 7,
**dadurch gekennzeichnet, dass** die flächig ausgebildete Anzeigeeinheit eine in einer Teilfläche vorgesehene Displayeinheit (54) aufweist, wobei zumindest ein der Teilfläche benachbarter Bereich (58) der Anzeigeeinheit eine Verspiegelung und/oder eine dekorative farbige Flächengestaltung und/oder in der Fläche gebildete, insbesondere in diese eingesetzte Beleuchtungsmittel (60, 62) aufweist.

9. System nach einem der Ansprüche 1 bis 8,
**dadurch gekennzeichnet, dass** die der Anzeigeeinheit zugeordneten, insbesondere an dieser befestigten Anwesenheitsdetektions- bzw. Lokalisierungsmittel (66) einen weiter bevorzugt auf Mikrowellen- oder Infrarotbasis wirkenden Bewegungs- oder Anwesenheitssensor, Kameramittel oder drahtlos unmittelbar mit der mobilen Datenverarbeitungseinheit zusammenwirkende Kommunikationsmittel aufweisen.

10. System nach einem der Ansprüche 1 bis 9.
**dadurch gekennzeichnet, dass** die Skalierungsmittel (68) zum Durchführen einer von einem durch die Anwesenheitsdetektions- bzw. Lokalsierungsmittel (66) detektierten Abstand des Betrachters zur Anzeigeeinheit beeinflussten Vergrößerung der dargestellten Informationen ausgebildet sind.

11. System nach einem der Ansprüche 1 bis 10,
**dadurch gekennzeichnet, dass** die Content-Auswahlmittel (70) zum Durchführen einer von einem durch die Anwesenheitsdetektions- bzw.
Lokalisierungsmittel (66) detektierten Abstand des Betrachters zur Anzeigeeinheit und/oder von einer Betrachteridentifikation beeinflussten Auswahl der dargestellten visuellen Informationen aus einer Content-Speichereinheit (72) ausgebildet ist.
